# EUROPÄISCHE PATENTSCHRIFT

(11) **EP 3 959 498 B1**
(45) Veröffentlichungstag und Bekanntmachung des Hinweises auf die Patenterteilung: **11.02.2026**
(21) Anmeldenummer: 19739903.3
(22) Anmeldetag: 26.06.2019
(51) Int. Cl.: G01M 13/00

(54) **AKUSTISCHE ANALYSE EINES ZUSTANDS EINER MASCHINE**
ACOUSTIC ANALYSIS OF A CONDITION OF A MACHINE
ANALYSE ACOUSTIQUE D'UN ÉTAT D'UNE MACHINE

(43) Veröffentlichungstag der Anmeldung: 02.03.2022
(73) Patentinhaber: Siemens Aktiengesellschaft, 80333 München (DE)
(72) Erfinder: KRÜGER, Daniel, 91126 Rednitzhembach (DE); JÖHNSSEN, Oliver, 91058 Erlangen (DE); KUBO, Florian, 97727 Fuchsstadt (DE)
(74) Vertreter: Siemens Patent Attorneys
(86) Internationale Anmeldenummer: PCT/EP2019/066939
(87) Internationale Veröffentlichungsnummer: WO 2020/259819

(56) Entgegenhaltungen:
- BE-A3- 1 018 513
- DE-A1- 10 117 114
- DE-A1- 102018 003 222
- US-B1- 6 650 757

## Beschreibung

Die vorliegende Erfindung betrifft ein Verfahren zum Erzeugen wenigstens eines Referenzsignals zur akustischen Analyse eines Zustands einer Maschine, ein Verfahren zur akustischen Analyse eines Zustands einer Maschine, wobei ein akustisches Betriebssignal während eines Betriebs der Maschine aufgezeichnet wird, eine entsprechende Analysevorrichtung sowie ein Computerprogramm und ein computerlesbares Speichermedium.

Beispielsweise bei der industriellen Fertigung finden zunehmend Datenanalyseverfahren Verbreitung, welche unter anderem auf eine vorausschauende Planung von Wartungsarbeiten an Maschinen abzielen, um so Ausfallzeiten oder Qualitätseinbußen im Fertigungsprozess minimieren zu können ("predictive maintenance").

In bekannten Verfahren werden prozessbegleitend erfasste Zustandsdaten einer Maschine anhand von Verfahren des maschinellen Lernens analysiert und es wird versucht, aussagekräftige Trends abzuleiten. Dafür sind gegebenenfalls große Datenmengen erforderlich, um verlässliche Vorhersagen treffen zu können, sowie damit einhergehend entsprechend hohe Rechenkapazitäten.

Aus der BE 1 018 513 A3 ist bereits ein Arbeitsverfahren zur Früherkennung von Schäden an einer Maschine mittels einer akustischen Signatur oder mehreren Signaturen aufgenommen mittels mehrerer Mikrofone bekannt.

Weitere Nachteile bekannter Verfahren sind deren teilweise großer Instrumentierungsaufwand, ein eingeschränkter Anwendungsbereich oder mangelnde Automatisierbarkeit.

Vor diesem Hintergrund ist es eine Aufgabe der vorliegenden Erfindung, ein verbessertes Konzept zur akustischen Analyse eines Zustands einer Maschine anzugeben, anhand dessen sich eine zu verarbeitende Datenmenge und ein zur Verarbeitung erforderlicher Rechenaufwand reduzieren lassen.

Erfindungsgemäß wird diese Aufgabe jeweils durch den Gegenstand der unabhängigen Ansprüche gelöst. Vorteilhafte Weiterbildungen und Ausgestaltungsformen sind Gegenstand der abhängigen Ansprüche.

Das verbesserte Konzept beruht auf der Idee, akustische Einzelsignale für individuelle Komponenten der Maschine bereitzustellen und basierend darauf ein Referenzsignal zu erzeugen.

Gemäß einem ersten unabhängigen Aspekt des verbesserten Konzepts wird ein Verfahren zum Erzeugen wenigstens eines Referenzsignals zur akustischen Analyse eines Zustands einer Maschine angegeben. Dabei wird für jede von wenigstens zwei Komponenten der Maschine wenigstens ein akustisches Einzelsignal bereitgestellt. Mittels einer Recheneinheit wird basierend auf den Einzelsignalen ein zu erwartendes akustisches Gesamtsignal bestimmt. Mittels der Recheneinheit wird das Referenzsignal abhängig von dem Gesamtsignal erzeugt.

Unter der akustischen Analyse der Maschine kann insbesondere eine Analyse eines Betriebsgeräusches der Maschine verstanden werden. Insbesondere beinhaltet die akustische Analyse die Analyse von Luftschallwellen, welche durch einen Betrieb der Maschine erzeugt werden.

Die Recheneinheit kann einen oder mehrere Untereinheiten oder Prozessoreinheiten beinhalten, die beispielsweise räumlich verteilt angeordnet sein können. Insbesondere können verschiedene Verfahrensschritte von unterschiedlichen Untereinheiten der Recheneinheit durchgeführt werden.

Bei einer Komponente der Maschine handelt es sich um eine geräuschemittierende Komponente der Maschine. Die Komponente kann beispielsweise einen Motor, eine Getriebevorrichtung und/oder sonstige elektrische Bauelemente oder mechanisch bewegliche Teile aufweisen.

Das Bereitstellen der akustischen Einzelsignale beinhaltet insbesondere das Erzeugen der jeweiligen akustischen Einzelsignale. Dabei kann das Erzeugen der Einzelsignale durch das Erfassen jeweiliger Einzelbetriebsgeräusche der entsprechenden Komponenten mittels eines Schallwandlers erfolgen. Alternativ, ergänzend oder zusätzlich kann das Erzeugen der Einzelsignale eine Simulation, also gewissermaßen synthetische Erzeugung, der akustischen Einzelsignale beinhalten.

Unter einem Schallwandler kann hier und im Folgenden ein Schallsensor oder ein Schallempfänger verstanden werden, also eine Sensor- oder Empfangseinheit, die dazu eingerichtet ist, Luftschall in elektrische Signale umzuwandeln. Insbesondere kann ein Schallwandler als Mikrofon ausgeführt sein.

Der Schallwandler beziehungsweise die Recheneinheit sind Teil einer Analysevorrichtung zur akustischen Analyse eines Zustands einer Maschine.

Für jede der wenigstens zwei Komponenten der Maschine das wenigstens eine zugehörige akustische Einzelsignal abhängig von jeweiligen Einzelbetriebsgeräuschen der entsprechenden Komponente erzeugt, insbesondere mittels eines Schallwandlers.

Dabei werden die akustischen Einzelsignale basierend auf den Einzelbetriebsgeräuschen der jeweiligen Komponenten in einem Referenz- oder Neuzustand der Maschine erzeugt.

Insbesondere wird pro Komponente der Maschine und pro Einzelbetriebszustand der Komponente ein zugehöriges akustisches Einzelsignal bereitgestellt oder erzeugt, wobei jeder Einzelbetriebszustand einer Komponente aus einer vorgegebenen Menge von Einzelbetriebszuständen der Komponente ausgewählt ist.

Die akustischen Einzelsignale für eine gegebene Komponente der wenigstens zwei Komponenten sind insbesondere unabhängig von weiteren Komponenten der wenigstens zwei Komponenten. Das bedeutet weitere der wenigstens zwei Komponenten tragen zu dem jeweiligen Einzelbetriebsgeräusch der gegebenen Komponente nicht bei. Mit anderen Worten werden die Einzelbetriebsgeräusche der einzelnen Komponenten individuell erfasst, insbesondere während die weiteren der wenigstens zwei Komponenten außer Betrieb oder akustisch von der gegebenen Komponente isoliert sind.

Hier und im Folgenden kann unter dem Aufzeichnen oder Aufnehmen eines Geräuschs, insbesondere eines Betriebs- oder Einzelbetriebsgeräuschs, das Erfassen des jeweiligen Betriebsgeräuschs, insbesondere mittels wenigstens eines Schallwandlers, und das darauffolgende Speichern des dadurch erzeugten Signals auf einem computerlesbaren Speichermedium, beispielsweise der Recheneinheit, verstanden werden.

Die Einzelsignale können insbesondere als zeitabhängige Signale oder als Signale in einem Frequenzraum bereitgestellt werden. Entsprechend können das Gesamtsignal und/oder das Referenzsignal jeweils als zeitabhängiges Signal oder als Signal im Frequenzraum erzeugt werden.

Dadurch, dass für jede der wenigstens zwei Komponenten eines oder mehrere individuelle zugehörige akustische Einzelsignale erzeugt beziehungsweise bereitgestellt werden und diese zum Erzeugen des Gesamt- und des Referenzsignals zugrunde gelegt werden, werden die einzelnen Komponenten der Maschine unabhängig voneinander individuell berücksichtigt, um das Referenzsignal zu erzeugen. Dadurch lassen sich gezielt zusätzliche Einflüsse berücksichtigen, die zu dem Gesamtsignal oder dem Referenzsignal beitragen, wie beispielsweise Umwelt- oder Störeinflüsse, beispielsweise auf Grundlage empirischer Daten, Simulationsdaten oder auf Grundlage theoretischer oder teilweise theoretischer Modelle.

Dadurch, dass die akustischen Einzelsignale bekannt sind, welche beispielsweise als nominale Signale oder Nominalgeräusche der einzelnen Komponenten in dem Referenz- oder Neuzustand der Maschine verstanden werden können, ist es bei der nachfolgenden Analyse des Zustands der Maschine unter Bezugnahme auf das Referenzsignal nur erforderlich, ein gesamtes Betriebsgeräusch der gesamten Maschine zu erfassen. Insbesondere ist es nicht erforderlich, auch im Rahmen der Analyse des Zustands der Maschine die einzelne Betriebsgeräusche der individuellen Komponenten aufzunehmen, da die Einflüsse der einzelnen Komponenten zu dem Gesamtgeräusch oder gesamten Betriebsgeräusch der Maschine separiert oder isoliert werden können. Dementsprechend kann eine relativ komponentenferne Aufnahme des Betriebsgeräusches zur Analyse des Zustands der Maschine vorgenommen werden, eine komponentennahe Geräuschaufzeichnung ist nicht erforderlich.

Dadurch ergibt sich im Vergleich zu anderen akustischen Analyseverfahren der Vorteil, dass nach dem verbesserten Konzept ein geringerer Instrumentierungsaufwand erforderlich ist, insbesondere was die Anzahl und Positionierung eines oder mehrerer Schallwandler angeht. Insbesondere kann gemäß dem verbesserten Konzept ein Schallwandler ausreichen, um für die Analyse des Zustands das Betriebsgeräusch der Maschine aufzuzeichnen.

Gemäß zumindest einer Ausführungsform wird für jede der wenigstens zwei Komponenten ein jeweiliges erstes Einzelsignal aufgezeichnet, während sich die jeweilige Komponente in dem entsprechenden ersten Einzelbetriebszustand befindet. Das Gesamtsignal wird mittels der Recheneinheit abhängig von den ersten Einzelsignalen bestimmt. Dabei definiert eine, insbesondere vordefinierte, Kombination der ersten Einzelbetriebszustände der wenigstens zwei Komponenten, insbesondere aller der wenigstens zwei Komponenten, einen ersten Betriebszustand der Maschine.

Mit anderen Worten ist für jede der wenigstens zwei Komponenten ein erster Einzelzustand definiert. Die Kombination aller ersten Einzelzustände definiert oder bildet den ersten Betriebszustand der Maschine. Insbesondere kann jeder mögliche Betriebszustand der Maschine als vordefinierte Kombination entsprechender Einzelbetriebszustände der wenigstens zwei Komponenten der Maschine definiert werden.

Ein Einzelbetriebszustand einer der wenigstens zwei Komponenten kann beispielsweise durch einen oder mehrere vorgegebene Betriebsparameter für die Komponente und/oder einen oder mehrere Umgebungskennwerte für die Komponente beinhalten. Die Betriebsparameter können, je nach Art der Maschine und der Komponente, beispielsweise eine Drehzahl, eine Übersetzung, eine Vorschubgeschwindigkeit, eine Last oder dergleichen beinhalten. Bei den Umgebungskennwerten der Komponente kann es sich beispielsweise um eine Temperatur oder eine sonstige Umweltbedingung in einer Umgebung der Komponente handeln.

Das Gesamtsignal wird beispielsweise abhängig von den ersten Einzelsignalen bestimmt, indem diejenigen der ersten Einzelsignale zum Erzeugen des Gesamtsignals herangezogen werden, die den entsprechenden Einzelbetriebszuständen der Komponenten entsprechen, welche zusammen den ersten Betriebszustand der Maschine ausmachen.

Durch die Anpassung oder Variation der Einzelbetriebszustände beziehungsweise des Betriebszustands der Maschine kann ein Modell zum Erzeugen des Gesamtsignals verbessert werden. Die Genauigkeit des Referenzsignals und damit der Analyse des Zustands der Maschine werden dadurch verbessert.

Gemäß zumindest einer Ausführungsform ist ein zweiter Betriebszustand der Maschine gegeben durch eine definierte Kombination jeweiliger zweiter Einzelbetriebszustände der wenigstens zwei Komponenten. Für jede der wenigstens zwei Komponenten wird ein jeweiliges zweites Einzelsignal aufgezeichnet, während sich die jeweilige Komponente in dem entsprechenden zweiten Einzelbetriebszustand befindet. Das Gesamtsignal wird abhängig von den zweiten Einzelsignalen bestimmt.

Insbesondere unterscheidet sich der zweite Betriebszustand der Maschine von dem ersten Betriebszustand der Maschine. Dementsprechend unterscheidet sich wenigstens einer der zweiten Einzelbetriebszustände der wenigstens zwei Komponenten von dem entsprechenden ersten Einzelbetriebszustand der jeweiligen Komponente. Es ist möglich, jedoch nicht zwingend erforderlich, dass sich alle ersten Einzelbetriebszustände von den entsprechenden zweiten Einzelbetriebszuständen unterscheiden.

Gemäß zumindest einer Ausführungsform ist das Referenzsignal gleich dem Gesamtsignal.

Gemäß zumindest einer Ausführungsform wird das Referenzsignal erzeugt, indem, wie oben beschrieben, mehrere Gesamtsignale für unterschiedliche Betriebszustände der Maschine bestimmt werden und das Referenzsignal in Abhängigkeit von den mehreren Gesamtsignalen erzeugt wird, beispielsweise durch Interpolation.

Dadurch ist es nicht erforderlich, für jeden relevanten Betriebszustand der Maschine, der gegebenenfalls akustisch analysiert werden soll, ein eigenes akustisches Gesamtsignal durch Kombination separat aufgezeichneter Einzelsignale zu bestimmen. Es reicht vielmehr aus, repräsentative Betriebszustände der Maschine gewissermaßen als Stützstellen auszuwählen und für diese wie beschrieben das Gesamtsignal zu erzeugen. Das Referenzsignal für einen repräsentativen Betriebszustand entspricht dann dem jeweiligen Gesamtsignal, während das Referenzsignal für einen nicht zu den repräsentativen Betriebszuständen gehörenden Betriebszustand abhängig von Gesamtsignalen zweier oder mehrerer repräsentativer Betriebszustände erzeugt wird, beispielsweise durch Interpolation oder Kombination.

Gemäß zumindest einer Ausführungsform wird das Gesamtsignal abhängig von den Einzelsignalen anhand eines Modells erzeugt. Im einfachsten Fall kann das Modell darin bestehen, die einzelnen Einzelsignale zu addieren oder gewichtet zu addieren, wobei das Modell die entsprechenden Gewichtungsfaktoren beinhaltet. In komplexeren Ausführungsformen kann das Modell zusätzlich zu den Einzelsignalen weitere Einflüsse wie beispielsweise Störgeräusche oder sonstige Störungen, einen geometrischen Aufbau der Maschine, Umgebungsbedingungen der Maschine und/oder materialspezifische Geräuschsignaturen der Maschine berücksichtigen, um das Gesamtsignal zu erzeugen.

Gemäß zumindest einer Ausführungsform wird das akustische Gesamtsignal mittels der Recheneinheit abhängig von einer Pose einer der wenigstens zwei Komponenten bestimmt oder abhängig von zwei oder mehr Posen von zwei oder mehr der wenigstens zwei Komponenten.

Unter der Pose einer Komponente wird hier und im Folgenden eine Kombination aus Position und Orientierung der jeweiligen Komponente im dreidimensionalen Raum verstanden werden. Die Position und Orientierung der Komponente können dabei bezüglich einer oder mehrerer weiterer der wenigstens zwei Komponenten, bezüglich eines weiteren Bauteils der Maschine oder bezüglich eines Objekts in der Umgebung der Maschine, beispielsweise einen Gebäudeboden, eine Gebäudewand oder einer weitere Maschine, definiert sein.

Die Pose der Komponenten kann einen Einfluss darauf haben, wie die Einzelsignale zu gewichten sind, um das zu erwartende Gesamtsignal zu bilden. Zudem kann auch der Einfluss externer Einflüsse von den Posen abhängen. Durch die Berücksichtigung der Pose wird daher eine verbesserte Genauigkeit des Referenzsignals und schlussendlich der Analyse des Zustands der Maschine erreicht.

Gemäß zumindest einer Ausführungsform ist die Pose der einen der wenigstens zwei Komponenten oder sind die Posen aller der wenigstens zwei Komponenten auf einem Speichermedium, beispielsweise der Recheneinheit, gespeichert. Die Recheneinheit kann auf die gespeicherte Pose oder die gespeicherten Posen zugreifen, um das Gesamtsignal zu erzeugen.

Gemäß zumindest einer Ausführungsform wird das akustische Gesamtsignal mittels der Recheneinheit abhängig von einer nominalen Umgebungsbedingung der Maschine bestimmt.

Bei der nominalen Umgebungsbedingung handelt es sich insbesondere nicht um einen Messwert, sondern um einen oder mehrere Modellparameter zur Erzeugung oder Bestimmung des Gesamtsignals aus den Einzelsignalen. Je nach Umgebungsbedingung können sich unterschiedliche Einzelsignale beispielsweise unterschiedlich in dem Gesamtsignal widerspiegeln und/oder die externen Einflüsse auf das Gesamtsignal können von der Umgebungsbedingung abhängen.

Bei der nominalen Umgebungsbedingung kann es sich beispielsweise um eine Temperatur oder Luftfeuchtigkeit in der Umgebung der Maschine handeln, um ein Neben- oder Störgeräusch, um eine Raumgröße oder Raumbeschaffenheit eines Raums, in dem die Maschine angeordnet ist und/oder um die Art und Positionierung beziehungsweise Orientierung weiterer Objekte oder Maschinen in dem Raum.

Indem das Modell zur Bestimmung des Gesamtsignals die nominale Umgebungsbedingung berücksichtigt, kann die Genauigkeit bei der Erzeugung des Gesamtsignals verbessert werden.

Gemäß zumindest einer Ausführungsform wird eine aktuelle Umgebungsbedingung der Maschine mittels einer Sensorvorrichtung, insbesondere der Analysevorrichtung, bestimmt, insbesondere gemessen. Das Referenzsignal wird mittels der Recheneinheit abhängig von der aktuellen Umgebungsbedingung bestimmt, insbesondere abhängig von einem Differenzwert zwischen der aktuellen Umgebungsbedingung und der nominalen Umgebungsbedingung.

Durch die Berücksichtigung der tatsächlichen Umgebungsbedingung beziehungsweise der Abweichung der tatsächlichen Umgebungsbedingung von der nominalen Umgebungsbedingung kann die Bestimmung des Gesamtsignals weiter verbessert werden.

Gemäß einem weiteren unabhängigen Aspekt des verbesserten Konzepts wird ein Verfahren zur akustischen Analyse eines Zustands einer Maschine angegeben, wobei ein akustisches Betriebssignal, insbesondere abhängig von einem aktuellen Betriebsgeräusch der Maschine, während eines Betriebs der Maschine aufgezeichnet wird, insbesondere mittels wenigstens eines Schallwandlers. Anhand eines Verfahrens zum Erzeugen wenigstens eines Referenzsignals zur akustischen Analyse eines Zustands einer Maschine nach dem verbesserten Konzept wird ein Referenzsignal bereitgestellt. Der Zustand der Maschine wird basierend auf einer Abweichung des Betriebssignals von dem Referenzsignal analysiert.

Das Referenzsignal wird insbesondere bereitgestellt, indem es mittels eines Verfahrens zum Erzeugen eines Referenzsignals nach dem verbesserten Konzept erzeugt wird.

Wie oben ausgeführt wurde, können zum Aufzeichnen des Betriebssignals ein einziger Schallwandler oder wenige Schallwandler ausreichen, und dennoch eine komponentenspezifische Analyse des Zustands der Maschine durchgeführt werden.

Auch im Vergleich zu Analyseverfahren basierend auf Körperschallmessungen oder thermografischen Messungen ist ein Instrumentierungsaufwand bei einem Verfahren nach dem verbesserten Konzept reduziert.

Mittels des verbesserten Konzepts kann die Analyse des Zustands zudem automatisiert durchgeführt werden, da keine manuellen Untersuchungen notwendig sind, beispielsweise Untersuchungen von Verschleißrückständen im Maschinenöl, wie es in ferrographischen Verfahren der Fall ist.

Ein weiterer Vorteil des verbesserten Konzepts ist die universelle Anwendbarkeit der Verfahren auf nahezu beliebige Maschinen mit geräuschemittierenden Komponenten.

Durch die Analyse nach dem verbesserten Konzept, insbesondere anhand eines Referenzsignals, das gemäß dem verbesserten Konzept erzeugt wurde, ist die Datenmenge, welche zur Analyse untersucht werden muss, relativ gering. Daher kann auf komplexe Datenanalyseverfahren, wie sie beispielsweise beim Deep Learning oder maschinellen Lernen eingesetzt werden, verzichtet werden. Dies führt auch zu einem reduzierten Rechenaufwand für die Analyse. Dementsprechend ist es insbesondere nicht erforderlich, die zu analysierenden Daten in zentralen Backend- oder Cloud-Servern zu verarbeiten. Vielmehr kann die Analyse vor Ort ("on premises") durchgeführt werden.

Gemäß zumindest einer Ausführungsform des Verfahrens zur akustischen Analyse eines Zustands einer Maschine nach dem verbesserten Konzept wird mittels der Recheneinheit ein aktueller Betriebszustand der Maschine bestimmt. Das Referenzsignal wird mittels der Recheneinheit abhängig von dem aktuellen Betriebszustand bereitgestellt.

Zum Bestimmen des aktuellen Betriebszustands können beispielsweise aktuelle Betriebsparametern mittels der Recheneinheit von einer Steuereinheit der Maschine, insbesondere aus einem Steuerprogramm zur Steuerung der Maschine, gelesen werden. Dazu kann die Recheneinheit insbesondere mit der Steuereinheit der Maschine gekoppelt sein.

Der aktuelle Betriebszustand der Maschine ist beispielsweise, insbesondere zu jedem Zeitpunkt, deterministisch durch das Steuerprogramm für die Maschine festgelegt. Damit lässt sich das zu erwartende nominelle akustische Verhalten der Maschine durch entsprechende Bereitstellung des Referenzsignals in einem zeitlich sehr engen Rahmen vorhersagen.

Um das Referenzsignal abhängig von dem aktuellen Betriebszustand bereitzustellen, kann ein für einen repräsentativen Betriebszustand erzeugtes Gesamtsignal als Referenzsignal gewählt werden oder das Referenzsignal wird abhängig von Gesamtsignalen zweier oder mehrerer repräsentativer Betriebszustände erzeugt, wie oben ausgeführt. Dabei können die jeweiligen Gesamtsignale nach der Bestimmung des aktuellen Betriebszustands anhand des Modells erzeugt werden oder bereits vorab erzeugt und vorgehalten werden.

Gemäß zumindest einer Ausführungsform wird mittels der Recheneinheit ein Differenzsignal basierend auf der Abweichung des Betriebssignals von dem Referenzsignal erzeugt. Der Zustand wird mittels der Recheneinheit basierend auf dem Differenzsignal analysiert.

Dadurch können der Einfluss von Rauschen sowie ebenso wie eine Komplexität der Auswertung reduziert werden.

Gemäß zumindest einer Ausführungsform wird mittels der Recheneinheit basierend auf dem Differenzsignal ein Frequenzsignal erzeugt. Der Zustand wird mittels der Recheneinheit basierend auf dem Frequenzsignal analysiert.

Zum Erzeugen des Frequenzsignals wird insbesondere das Differenzsignal einer Fourier-Transformation unterzogen.

In solchen Ausführungsformen liegt das Differenzsignal, und liegen insbesondere das Referenzsignal und das Betriebssignal, als zeitabhängige Signale vor.

Im Frequenzraum können Rauschanteile beispielsweise ausgeblendet oder entfernt werden kann. Dadurch können anomale Signalsignaturen oder Signalsignaturen, die auf Verschleiß der Anlage zurückgehen, eindeutiger identifiziert werden.

Gemäß zumindest einer Ausführungsform wird mittels der Recheneinheit anhand der Analyse des Zustands überprüft, ob eine Anomalie im Betrieb der Maschine vorliegt.

Bei der Anomalie handelt es sich insbesondere um eine Abweichung des aktuellen Betriebszustands der Maschine oder aktueller Einzelbetriebszustände der Komponenten von erwarteten Zuständen. Die Anomalie kann beispielsweise auf einen Fehler oder Defekt zurückgehen.

Gemäß zumindest einer Ausführungsform wird mittels der Recheneinheit anhand der Analyse identifiziert, welche der wenigstens zwei Komponenten die Anomalie zeigt.

Dies ist insbesondere aufgrund der möglichen Separation der einzelnen Geräuschsignaturen der Komponenten möglich.

Gemäß zumindest einer Ausführungsform wird mittels der Recheneinheit anhand der Analyse des Zustands ein Verschleißgrad der Maschine bestimmt.

Gemäß zumindest einer Ausführungsform wird mittels der Recheneinheit anhand der Analyse des Zustands ein Einzelverschleißgrad einer oder mehrerer der wenigstens zwei Komponenten bestimmt.

Insbesondere kann anhand charakteristischer Signaturen im Differenzsignal oder im Frequenzsignal zwischen einer möglichen Anomalie und Verschleißerscheinungen unterschieden werden.

Weitere Ausführungsformen des Verfahrens zum Erzeugen eines Referenzsignals nach dem verbesserten Konzept ergeben sich unmittelbar aus den verschiedenen Ausgestaltungen des Verfahrens zur Analyse eines Zustands einer Maschine nach dem verbesserten Konzept und umgekehrt.

Gemäß einem weiteren unabhängigen Aspekt des verbesserten Konzepts wird eine Analysevorrichtung zur akustischen Analyse eines Zustands einer Maschine angegeben, wobei die Analysevorrichtung wenigstens einen Schallwandler und eine Recheneinheit aufweist. Der wenigstens eine Schallwandler ist dazu eingerichtet, abhängig von jeweiligen Einzelbetriebsgeräuschen von wenigstens zwei Komponenten der Maschine jeweilige akustische Einzelsignale zu erzeugen. Die Recheneinheit ist dazu eingerichtet, basierend auf den Einzelsignalen ein zu erwartendes akustisches Gesamtsignal zu bestimmen. Die Recheneinheit ist dazu eingerichtet, ein Referenzsignal abhängig von dem Gesamtsignal zu erzeugen.

Beispielsweise kann der wenigstens eine Schallwandler aus genau einem Schallwandler bestehen. In solchen Ausführungsformen kann der Schallwandler beispielsweise an verschiedenen Orten positioniert werden, um die jeweiligen Einzelbetriebsgeräusche aufzunehmen und/oder der Schallwandler kann dazu eingesetzt werden, die jeweiligen Betriebsgeräusche der unterschiedlichen Komponenten nacheinander aufzuzeichnen.

Alternativ kann der wenigstens eine Schallwandler zwei oder mehr Schallwandler beinhalten, wobei zur Aufnahme jedes der Einzelbetriebsgeräusche einer oder mehrere der Schallwandler eingesetzt werden.

Die akustischen Einzelsignale werden insbesondere auf einem Speichermedium gespeichert, insbesondere mittels der Recheneinheit.

Mit anderen Worten werden wenigstens zwei akustische Einzelsignale erzeugt, wobei jedes der wenigstens zwei akustischen Einzelsignale zu einer zugehörigen Komponente der wenigstens zwei Komponenten gehört.

Gemäß zumindest einer Ausführungsform weist die Analysevorrichtung eine Sensorvorrichtung auf, die dazu eingerichtet ist, eine aktuelle Umgebungsbedingung der Maschine zu bestimmen. Die Recheneinheit ist dazu eingerichtet, das Gesamtsignal abhängig von der aktuellen Umgebungsbedingung zu bestimmen.

Gemäß zumindest einer Ausführungsform ist der wenigstens eine Schallwandler dazu eingerichtet, abhängig von einem Betriebsgeräusch der Maschine ein akustisches Betriebssignal zu erzeugen. Die Recheneinheit ist dazu eingerichtet, den Zustand basierend auf einer Abweichung des Betriebssignals von dem Referenzsignal zu analysieren.

Bei dem Betriebsgeräusch der Maschine handelt es sich insbesondere um ein Gesamtbetriebsgeräusch der Maschine, also ein Betriebsgeräusch, das von mehreren der wenigstens zwei Komponenten zusammen erzeugt wird.

Weitere Ausführungsformen der Analysevorrichtung ergeben sich unmittelbar aus den beschriebenen Ausgestaltungen der verschiedenen Verfahren nach dem verbesserten Konzept und jeweils umgekehrt.

Gemäß einem weiteren unabhängigen Aspekt des verbesserten Konzepts wird ein Computerprogramm mit Befehlen angegeben. Wenn das Computerprogramm durch ein Computersystem, insbesondere durch eine Analysevorrichtung nach dem verbesserten Konzept, beispielsweise eine Recheneinheit der Analysevorrichtung, ausgeführt wird, veranlassen die Befehle das Computersystem, insbesondere die Analysevorrichtung, beispielsweise die Recheneinheit, dazu, ein Verfahren zum Erzeugen wenigstens eines Referenzsignals zur akustischen Analyse eines Zustands einer Maschine nach dem verbesserten Konzept durchzuführen.

Gemäß einem weiteren unabhängigen Aspekt des verbesserten Konzepts wird ein weiteres Computerprogramm mit weiteren Befehlen angegeben. Wenn das weitere Computerprogramm durch eine Analysevorrichtung nach dem verbesserten Konzept, insbesondere durch eine Recheneinheit der Analysevorrichtung, ausgeführt wird, veranlassen die weiteren Befehle die Analysevorrichtung, insbesondere die Recheneinheit, dazu, ein Verfahren zur akustischen Analyse eines Zustands einer Maschine nach dem verbesserten Konzept durchzuführen.

Gemäß einem weiteren unabhängigen Aspekt des verbesserten Konzepts wird ein computerlesbares Speichermedium angegeben, auf dem ein Computerprogramm und/oder ein weiteres Computerprogramm nach dem verbesserten Konzept gespeichert ist.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- FIG 1: eine schematische Darstellung einer beispielhaften Ausführungsform einer Analysevorrichtung nach dem verbesserten Konzept;
- FIG 2: ein Ablaufdiagramm einer beispielhaften Ausführungsform eines Verfahrens nach dem verbesserten Konzept, insbesondere eines Verfahrens zum Analysieren eines Zustands einer Maschine nach dem verbesserten Konzept; und
- FIG 3: Signale im Kontext eines Verfahrens gemäß FIG 2.

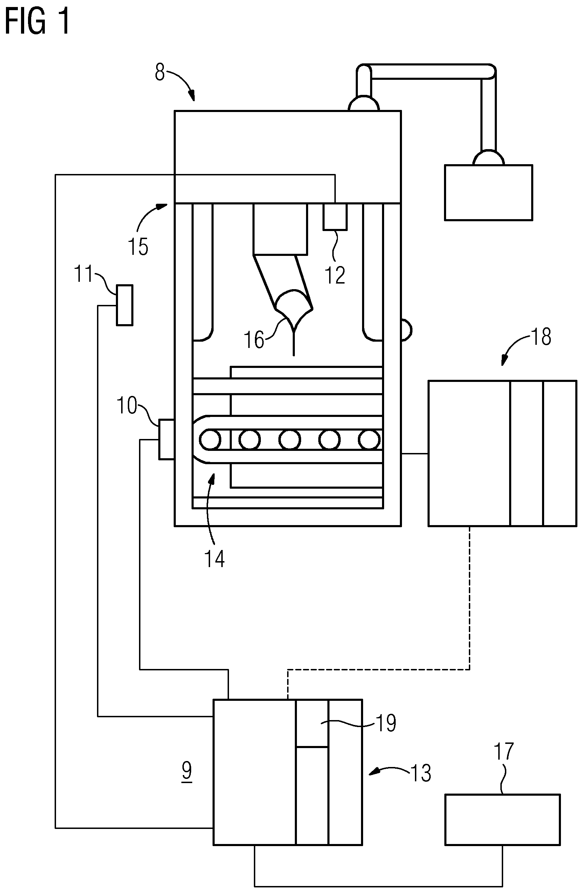

In FIG 1 ist eine Maschine 8 dargestellt, die beispielsweise als Industrieroboter oder als Maschine zur subtraktiven oder additiven Fertigung von Bauteilen ausgebildet sein kann.

Die Maschine 8 weist beispielsweise mehrere Komponenten auf, im schematischen Beispiel der FIG 1 drei Komponenten 14, 15, 16. Die Komponenten 14, 15, 16 können beispielsweise einen oder mehrere entsprechende Motoren oder sonstige geräuschemittierende Bauteile aufweisen. Dabei wird ein geräuschemittierendes Bauteil beispielsweise dann als solches bezeichnet, wenn es im Betrieb der Maschine 8, insbesondere einem bestimmten Betriebszustand der Maschine 8, Geräusche erzeugt.

Die Maschine 8 weist außerdem eine Steuereinheit 18 auf, die mit wenigstens einer der Komponenten 14, 15, 16 gekoppelt ist, um unter anderem diese anzusteuern.

In FIG 1 ist außerdem eine schematische Darstellung einer beispielhaften Ausführungsform einer Analysevorrichtung 9 zur akustischen Analyse eines Zustands der Maschine 8 gezeigt.

Die Analysevorrichtung 9 weist eine Recheneinheit 13 auf, die beispielsweise als Computersystem mit einer oder mehreren Prozessoreinheiten ausgestaltet ist. Die Recheneinheit 13 ist beispielsweise mit der Steuereinheit 18 gekoppelt. Außerdem weist die Analysevorrichtung 9 wenigstens einen Schallwandler auf, im nicht beschränkenden Beispiel der FIG 1 beispielsweise drei Mikrofone 10, 11, 12. Ein erstes Mikrofon 10 kann dabei in einer Umgebung einer ersten Komponente 14 angeordnet sein, ein zweites Mikrofon 11 kann beispielsweise in einer Umgebung einer zweiten Komponente 15 angeordnet sein und ein drittes Mikrofon 12 kann beispielsweise in einer Umgebung einer dritten Komponente 16 angeordnet sein.

Die beschriebene Anordnung der Mikrofone 10, 11, 12 kann beispielsweise zur Durchführung eines Verfahrens zum Erzeugen wenigstens eines Referenzsignals nach dem verbesserten Konzept wie gezeigt vorgesehen sein. Insbesondere kann die beschriebene Anordnung der Mikrofone 10, 11, 12 dazu dienen, jeweilige akustische Einzelsignale der Komponenten 14, 15, 16 aufzuzeichnen, um das Referenzsignal zu erzeugen.

Nachdem die akustischen Einzelsignale aufgezeichnet wurden, kann eines oder können mehrere oder alle Mikrofone 10, 11, 12 abweichend angeordnet werden, insbesondere um in weitergehenden Schritten eines Verfahrens zur akustischen Analyse nach dem verbesserten Konzept ein Betriebsgeräusch der Maschine 8, insbesondere ein Gesamtbetriebsgeräusch der Maschine 8, aufzuzeichnen. Dazu können in verschiedenen Ausführungsformen alle Mikrofone 10, 11, 12 eingesetzt werden. In alternativen Ausführungsformen werden nicht alle Mikrofone 10, 11, 12 eingesetzt, beispielsweise wird nur eines der Mikrofone 10, 11, 12 eingesetzt, um das Betriebsgeräusch der Maschine 8 aufzuzeichnen.

Optional weist die Analysevorrichtung 9 eine Sensorvorrichtung 17 auf, die mit der Recheneinheit 13 verbunden ist oder gekoppelt ist, insbesondere um eine aktuelle Umgebungsbedingung, beispielsweise eine Umgebungstemperatur, der Maschine 8 zu bestimmen.

Optional weist die Recheneinheit 13 ein computerlesbares Speichermedium 19, insbesondere nach dem verbesserten Konzept, auf oder die Recheneinheit 13 ist mit einem solchen computerlesbaren Speichermedium 19 gekoppelt.

Die Recheneinheit 13 kann beispielsweise ein Computerprogramm nach dem verbesserten Konzept ausführen, welches auf dem computerlesbaren Speichermedium 19 gespeichert ist, um die Analysevorrichtung 9 zum Durchführen eines Verfahrens nach dem verbesserten Konzept zu veranlassen.

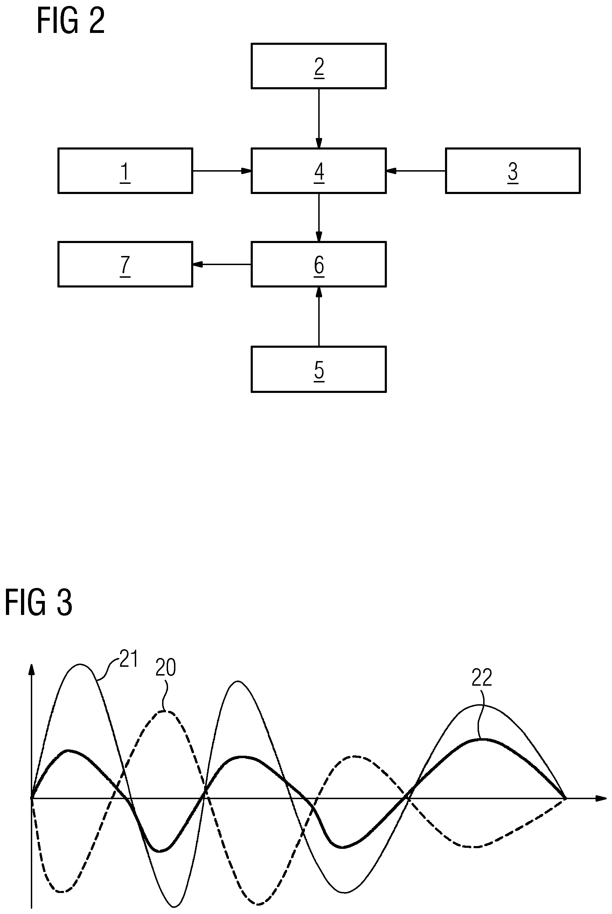

Die Funktionsweise der Analysevorrichtung 9 der FIG 1 wird im Folgenden unter Bezugnahme auf eine beispielhafte Ausführungsform eines Verfahrens zur akustischen Analyse eines Zustands einer Maschine nach dem verbesserten Konzept erläutert, insbesondere unter Bezugnahme auf die FIG 2, FIG 3. Die beschriebenen Verfahrensschritte 1 - 7 müssen dabei nicht zwingend in der durch deren Nummerierung nahegelegten Reihenfolge durchgeführt werden.

In FIG 2 ist ein Ablaufdiagramm einer beispielhaften Ausführungsform eines Verfahrens zur akustischen Analyse eines Zustands der Maschine 8 nach dem verbesserten Konzept gezeigt.

In Schritt 1 des Verfahrens werden beispielsweise die akustischen Einzelsignale der einzelnen Komponenten 14, 15, 16 mittels der entsprechenden Mikrofone 10, 11, 12 aufgezeichnet. Dabei erfolgt die Aufzeichnung eines jeweiligen Einzelsignals einer bestimmten Komponente 14, 15, 16 insbesondere isoliert von den übrigen Komponenten. Wird beispielsweise das Einzelsignal für die erste Komponente 14 aufgezeichnet, so wird ein etwaiges Betriebsgeräusch weiterer Komponente 15, 16 von dem ersten Mikrofon 10 abgeschirmt. Falls möglich, können einzelne der übrigen Komponenten 15, 16 während des Aufzeichnen des Einzelsignals der ersten Komponente 14 auch außer Betrieb gesetzt werden. Die Einzelsignale werden beispielsweise für unterschiedliche Einzelbetriebszustände der Komponenten 14, 15, 16 erzeugt.

Alternativ zu der Verwendung dedizierter Mikrofone 10, 11, 12 für jede der Komponenten 14, 15, 16 können auch mit weniger Mikrofonen, beispielsweise mit nur einem Mikrofon, die Einzelsignale aller Komponenten 14, 15, 16 aufgezeichnet werden, beispielsweise hintereinander.

Im optionalen Schritt 2 des Verfahrens werden beispielsweise mittels der Sensorvorrichtung 17 Umgebungsbedingungen der Maschine 8 erfasst. Alternativ oder zusätzlich können in dem optionalen Schritt 2 Informationen über eine Anordnung und/oder Orientierung, also Position und/oder Orientierung der Komponenten 14, 15, 16, beispielsweise bezüglich einander, mittels der Recheneinheit 13 geladen werden, beispielsweise von dem Speichermedium 19 oder von der Steuereinheit 18.

In Schritt 3 des Verfahrens wird ein aktueller Betriebszustand der Maschine 8 bestimmt. Dazu kann die Recheneinheit 13 beispielsweise auf die Steuereinheit 18, beispielsweise auf ein Steuerprogramm, welches mittels der Steuereinheit 18 abgearbeitet wird, zugreifen, um aktuelle Betriebsparameter oder Zustandsparameter der Maschine 8 zu bestimmen.

In Schritt 4 werden die Informationen aus den Schritten 1 und 3 und optional aus Schritt 2 verarbeitet, um ein Referenzsignal bereitzustellen.

Insbesondere bestimmt die Recheneinheit 13 anhand des aktuellen Betriebszustands der Maschine 8, welche der Einzelsignale wie miteinander und gegebenenfalls mit weiteren Informationen, beispielsweise den Informationen aus Schritt 2 oder sonstigen Störeinflüssen oder Umgebungseinflüssen, kombiniert werden, um das Referenzsignal zu erzeugen. Alternativ können auch verschiedene Referenzsignale vorab erzeugt werden und die Recheneinheit 13 wählt eines davon abhängig von dem aktuellen Betriebszustand aus.

In Schritt 5 des Verfahrens wird wenigsten einem der Mikrofone 10, 11, 12 oder mittels eines weiteren Mikrofons (nicht gezeigt) ein Betriebsgeräusch während des aktuellen Betriebszustands der Maschine 8 erfasst und als Betriebssignal aufgezeichnet.

In Schritt 6 des Verfahrens erzeugt die Recheneinheit 13 beispielsweise basierend auf einer Abweichung des Betriebssignals 21 von dem Referenzsignal ein Differenzsignal 22.

Ebenfalls in Schritt 6 kann das Differenzsignal 22 beispielsweise in ein Frequenzsignal überführt werden, insbesondere durch Fourier-Transformation des Differenzsignals 22.

In Schritt 7 kann die Recheneinheit 13 beispielsweise das Differenzsignal 22 oder das Frequenzsignal analysieren, um den Zustand der Maschine 8 zu analysieren.

Beispielsweise kann die Recheneinheit 13 anhand des Differenz- oder Frequenzsignals feststellen, ob eine Anomalie im Betrieb der Maschine 8 vorliegt und gegebenenfalls aufgrund welcher Komponente 14, 15, 16 die Anomalie auftritt.

Alternativ oder zusätzlich kann die Recheneinheit 13 basierend auf dem Differenzsignal 22 oder dem Frequenzsignal auf einen Verschleißgrad der Maschine 8 und/oder einen jeweiligen Verschleißgrad einer oder mehrerer der Komponenten 14, 15, 16 schließen.

In FIG 3 sind die beschriebenen Signale schematisch dargestellt. FIG 3 zeigt jeweilige Signalamplituden des Betriebssignals 21, eines invertierten Referenzsignals 20 sowie des Differenzsignals 22 als Funktion der Zeit dargestellt. Das Differenzsignal ergibt sich als Summe der Signale 21, 20.

Nach dem verbesserten Konzept wird eine Möglichkeit zur Analyse des Zustands einer Maschine beziehungsweise ein Verfahren zur Erzeugung eines entsprechenden Referenzsignals angegeben, das ohne große Datenmengen und dementsprechend ohne hohe Rechenleistungen auskommt und dennoch eine vorausschauende Planung von Wartungsarbeiten erlaubt, um Ausfallzeiten oder Qualitätseinbußen in einem Fertigungsprozess mittels der Maschine zu minimieren.

Gemäß dem verbesserten Konzept wird insbesondere ein akustisches Verfahren zur frühzeitigen Erkennung von Verschleiß oder Anomalien an mechanischen Maschinenbauteile angegeben, wobei als Maß für den Verschleißzustand oder für das Vorliegen der Anomalie eine Abweichung zwischen einem Prozess begleitend mit einem oder mehreren Mikrofonen aufgezeichneten Betriebsgeräusch der Maschine und einem zu erwartenden Nominalgeräusch herangezogen wird. Das Nominalgeräusch wird dabei als Referenzsignal vorhergesagt. Die Modellierung des Referenzsignals beziehungsweise das Erzeugen des Referenzsignals kann beispielsweise als Angabe eines digitalen Zwillings der zu analysierenden Maschine angesehen werden. Die Vorhersage der Geräuschentwicklung der Maschine mithilfe des digitalen Zwillings nutzt eine deterministische Vorstellung über das Nominalgeräusch für unterschiedliche Betriebszustände der Maschine, sodass die Korrelation mit verschiedenen Verschleißniveaus mit einer kleineren Datenbasis bereits verlässlichere Aussagen liefert als konventionelle Ansätze.

### Bezugszeichenliste

- 1: Verfahrensschritt
- 2: Verfahrensschritt
- 3: Verfahrensschritt
- 4: Verfahrensschritt
- 5: Verfahrensschritt
- 6: Verfahrensschritt
- 7: Verfahrensschritt
- 8: Maschine
- 9: Analysevorrichtung
- 10: Mikrofon
- 11: Mikrofon
- 12: Mikrofon
- 13: Recheneinheit
- 14: Komponente
- 15: Komponente
- 16: Komponente
- 17: Sensorvorrichtung
- 18: Steuereinheit
- 19: Speichermedium
- 20: inverses Referenzsignal
- 21: Betriebssignal
- 22: Differenzsignal

## Patentansprüche

1. Verfahren zum Erzeugen wenigstens eines Referenzsignals (20) zur akustischen Analyse eines Zustands einer Maschine (8),
**dadurch gekennzeichnet, dass**
für jede von wenigstens zwei Komponenten (14, 15, 16) der Maschine (8) wenigstens ein akustisches Einzelsignal bereitgestellt wird;
mittels einer Recheneinheit (13) basierend auf den Einzelsignalen ein zu erwartendes akustisches Gesamtsignal bestimmt wird; und
das Referenzsignal (20) zur Analyse des Zustandes der Maschine (8) basierend auf einer Abweichung eines akustischen Betriebssignals (21) von dem Referenzsignal (20) mittels der Recheneinheit (13) abhängig von dem Gesamtsignal erzeugt wird.

2. Verfahren nach Anspruch 1,
**dadurch gekennzeichnet, dass**
für jede der wenigstens zwei Komponenten (14, 15, 16) ein jeweiliges erstes Einzelsignal aufgezeichnet wird, während sich die jeweilige Komponente (14, 15, 16) in einem entsprechenden ersten Einzelbetriebszustand befindet, wobei eine Kombination der ersten Einzelbetriebszustände der wenigstens zwei Komponenten (14, 15, 16) einen Betriebszustand der Maschine (8) definieren; und
das Gesamtsignal mittels der Recheneinheit (13) abhängig von den ersten Einzelsignalen bestimmt wird.

3. Verfahren nach einem der Ansprüche 1 oder 2,
**dadurch gekennzeichnet, dass**
das akustische Gesamtsignal mittels der Recheneinheit (13) abhängig von einer Pose einer der wenigstens zwei Komponenten (14, 15, 16) bestimmt wird,
wobei die Pose eine Kombination aus Position und Orientierung der jeweiligen Komponente im dreidimensionalen Raum ist.

4. Verfahren nach einem der Ansprüche 1 bis 3,
**dadurch gekennzeichnet, dass**
das akustische Gesamtsignal mittels der Recheneinheit (13) abhängig von einer nominalen Umgebungsbedingung der Maschine (8) bestimmt wird.

5. Verfahren nach einem der Ansprüche 1 bis 4,
**dadurch gekennzeichnet, dass**
eine aktuelle Umgebungsbedingung der Maschine (8) mittels einer Sensorvorrichtung (17) bestimmt wird; und
das Referenzsignal (20) mittels der Recheneinheit (13) abhängig von der aktuellen Umgebungsbedingung bestimmt wird.

6. Verfahren zur akustischen Analyse eines Zustands einer Maschine (8), wobei das akustisches Betriebssignal (21) während eines Betriebs der Maschine (8) aufgezeichnet wird;
**dadurch gekennzeichnet, dass**
ein anhand eines Verfahrens nach einem der Ansprüche 1 bis 5 erzeugtes Referenzsignal (20) bereitgestellt wird; und
der Zustand basierend auf der Abweichung des Betriebssignals (21) von dem Referenzsignal (20) analysiert wird.

7. Verfahren nach Anspruch 6,
**dadurch gekennzeichnet, dass**
mittels der Recheneinheit (13) ein aktueller Betriebszustand der Maschine (8) bestimmt wird; und
das Referenzsignal (20) abhängig von dem aktuellen Betriebszustand bereitgestellt wird.

8. Verfahren nach einem der Ansprüche 6 oder 7
**dadurch gekennzeichnet, dass**
mittels der Recheneinheit (13) ein Differenzsignal (22) basierend auf der Abweichung des Betriebssignals (21) von dem Referenzsignal (20) erzeugt wird; und
der Zustand mittels der Recheneinheit (13) basierend auf dem Differenzsignal (22) analysiert wird.

9. Verfahren nach Anspruch 8,
**dadurch gekennzeichnet, dass**
mittels der Recheneinheit (13) ein Frequenzsignal basierend auf dem Differenzsignal (22) erzeugt wird; und
der Zustand mittels der Recheneinheit (13) basierend auf dem Frequenzsignal analysiert wird.

10. Verfahren nach einem der Ansprüche 6 bis 9
**dadurch gekennzeichnet, dass**
mittels der Recheneinheit (13) anhand der Analyse des Zustands überprüft wird, ob eine Anomalie im Betrieb der Maschine (8) vorliegt; und/oder
mittels der Recheneinheit (13) anhand der Analyse des Zustands ein Verschleißgrad der Maschine (8) bestimmt wird.

11. Analysevorrichtung zur akustischen Analyse eines Zustands einer Maschine (8), wobei die Analysevorrichtung (9) wenigstens einen Schallwandler (10, 11, 12) und eine Recheneinheit (13) aufweist;
**dadurch gekennzeichnet, dass**
der wenigstens eine Schallwandler (10, 11, 12) dazu eingerichtet ist, abhängig von jeweiligen Einzelbetriebsgeräuschen von wenigstens zwei Komponenten (14, 15, 16) der Maschine (8) jeweilige akustische Einzelsignale zu erzeugen;
die Recheneinheit (13) dazu eingerichtet ist, basierend auf den Einzelsignalen ein zu erwartendes akustisches Gesamtsignal zu bestimmen; und
die Recheneinheit (13) dazu eingerichtet ist, ein Referenzsignal (20) abhängig von dem Gesamtsignal zu erzeugen.

12. Analysevorrichtung nach Anspruch 11,
**dadurch gekennzeichnet, dass**
die Analysevorrichtung (9) eine Sensorvorrichtung (17) aufweist, dazu eingerichtet, eine aktuelle Umgebungsbedingung der Maschine (8) zu bestimmen; und
die Recheneinheit (13) dazu eingerichtet ist, das Gesamtsignal abhängig von der aktuellen Umgebungsbedingung zu bestimmen.

13. Analysevorrichtung nach einem der Ansprüche 11 oder 12,
**dadurch gekennzeichnet, dass**
der wenigstens eine Schallwandler (10, 11, 12) dazu eingerichtet ist, abhängig von einem Betriebsgeräusch der Maschine (8) ein akustisches Betriebssignal (21) zu erzeugen; und
die Recheneinheit (13) dazu eingerichtet ist, den Zustand basierend auf einer Abweichung des Betriebssignals (21) von dem Referenzsignal (20) zu analysieren.

## Claims

1. Method for generating at least one reference signal (20) for acoustic analysis of a state of a machine (8),
**characterised in that**
at least one acoustic individual signal is provided for each of at least two components (14, 15, 16) of the machine (8), on the basis of the individual signals, an expected acoustic overall signal is determined by means of a computing unit (13); and
on the basis of a deviation of an acoustic operating signal (21) from the reference signal (20), the reference signal (20) for analysing the state of the machine (8) is generated by means of the computing unit (13) depending on the overall signal.

2. Method according to claim 1,
**characterised in that**
a respective first individual signal is recorded for each of the at least two components (14, 15, 16), while the respective component (14, 15, 16) is in a corresponding first individual operating state, wherein a combination of the first individual operating states of the at least two components (14, 15, 16) defines an operating state of the machine (8); and
the overall signal is determined by means of the computing unit (13) depending on the first individual signals.

3. Method according to one of claims 1 or 2,
**characterised in that**
the acoustic overall signal is determined by means of the computing unit (13) depending on a pose of one of the at least two components (14, 15, 16),
wherein the pose is a combination of position and orientation of the respective component in three-dimensional space.

4. Method according to one of claims 1 to 3,
**characterised in that**
the acoustic overall signal is determined by means of the computing unit (13) depending on a nominal ambient condition of the machine (8).

5. Method according to one of claims 1 to 4,
**characterised in that**
a current ambient condition of the machine (8) is determined by means of a sensor apparatus (17); and
the reference signal (20) is determined by means of the computing unit (13) depending on the current ambient condition.

6. Method for acoustic analysis of a state of a machine (8), wherein the acoustic operating signal (21) is recorded during operation of the machine (8);
**characterised in that**
a reference signal (20) generated based on a method according to one of claims 1 to 5 is provided; and
the state is analysed based on the deviation of the operating signal (21) from the reference signal (20).

7. Method according to claim 6,
**characterised in that**
a current operating state of the machine (8) is determined by means of the computing unit (13); and
the reference signal (20) is provided depending on the current operating state.

8. Method according to one of claims 6 or 7,
**characterised in that**
a difference signal (22) is generated by means of the computing unit (13) on the basis of the deviation of the operating signal (21) from the reference signal (20); and
the state is analysed by means of the computing unit (13) on the basis of the difference signal (22).

9. Method according to claim 8,
**characterised in that**
on the basis of the difference signal (22), a frequency signal is generated by means of the computing unit (13); and
the state is analysed by means of the computing unit (13) on the basis of the frequency signal.

10. Method according to one of claims 6 to 9,
**characterised in that**
based on the state analysis, it is checked by means of the computing unit (13) whether there is an anomaly during operation of the machine (8); and/or
based on the state analysis, a degree of wear of the machine (8) is determined by means of the computing unit (13).

11. Analysis apparatus for acoustic analysis of a state of a machine (8), wherein the analysis apparatus (9) has at least one sound transducer (10, 11, 12) and a computing unit (13);
**characterised in that**
the at least one sound transducer (10, 11, 12) is configured to generate acoustic individual signals in each case depending on individual operating noises from at least two components (14, 15, 16) of the machine (8) in each case;
on the basis of the individual signals, the computing unit (13) is configured to determine an expected acoustic overall signal; and
the computing unit (13) is configured to generate a reference signal (20) depending on the overall signal.

12. Analysis apparatus according to claim 11,
**characterised in that**
the analysis apparatus (9) has a sensor apparatus (17) configured to determine a current ambient condition of the machine (8); and
the computing unit (13) is configured to determine the overall signal depending on the current ambient condition.

13. Analysis apparatus according to one of claims 11 or 12,
**characterised in that**
the at least one sound transducer (10, 11, 12) is configured to generate an acoustic operating signal (21) depending on an operating noise of the machine (8); and
the computing unit (13) is configured to analyse the state based on a deviation of the operating signal (21) from the reference signal (20).

## Revendications

1. Procédé de production d'au moins un signal (20) de référence pour l'analyse acoustique de l'état d'une machine (8),
**caractérisé en ce que**,
pour chacun d'au moins deux composants (14, 15, 16) de la machine (8), on dispose d'au moins un signal acoustique individuel ;
au moyen d'une unité (13) informatique sur la base des signaux individuels, on détermine un signal acoustique d'ensemble à escompter ; et
on produit, en fonction du signal d'ensemble au moyen de l'unité (13) informatique, le signal (20) de référence pour l'analyse de l'état de la machine (8) sur la base d'un écart d'un signal (21) acoustique de fonctionnement au signal (20) de référence.

2. Procédé suivant la revendication 1,
**caractérisé en ce que**,
pour chacun des au moins deux composants (14, 15, 16), on enregistre un premier signal individuel respectif pendant que le composant (14, 15, 16) respectif se trouve dans un premier état de fonctionnement individuel correspondant, dans lequel une combinaison des premiers états de fonctionnement individuels des au moins deux composants (14, 15, 16) définit un état de fonctionnement de la machine (8) ; et
on détermine le signal d'ensemble au moyen de l'unité (13) informatique en fonction des premiers signaux individuels.

3. Procédé suivant l'une des revendications 1 ou 2,
**caractérisé en ce que**
l'on détermine le signal acoustique d'ensemble au moyen d'une unité (13) informatique en fonction d'une pose de l'un des au moins deux composants (14, 15, 16),
dans lequel la pose est une combinaison de position et d'orientation du composant respectif dans l'espace en trois dimensions.

4. Procédé suivant l'une des revendications 1 à 3,
**caractérisé en ce que**
l'on détermine le signal acoustique d'ensemble au moyen de l'unité (13) informatique en fonction d'une condition d'environnement nominale de la machine (8).

5. Procédé suivant l'une des revendications 1 à 4,
**caractérisé en ce que**
l'on détermine une condition d'environnement en cours de la machine (8) au moyen d'un dispositif (17) capteur ; et
on détermine le signal (20) de référence au moyen de l'unité (13) informatique en fonction de la condition d'environnement en cours.

6. Procédé d'analyse acoustique de l'état d'une machine (8), dans lequel on enregistre le signal (21) acoustique de fonctionnement pendant un fonctionnement de la machine (8) ;
**caractérisé en ce que**
l'on dispose d'un signal (20) de référence produit à l'aide d'un procédé suivant l'une des revendications 1 à 5 ; et
l'on analyse l'état sur la base de l'écart du signal (21) de fonctionnement au signal (20) de référence.

7. Procédé suivant la revendication 6,
**caractérisé en ce que**
l'on détermine un état de fonctionnement en cours de la machine (8) au moyen de l'unité (13) informatique ; et
on dispose du signal (20) de référence en fonction de l'état de fonctionnement en cours.

8. Procédé suivant l'une des revendications 6 ou 7,
**caractérisé en ce que**
l'on produit au moyen de l'unité (13) informatique un signal (22) de différence sur la base de l'écart du signal (21) de fonctionnement au signal (20) de référence ; et
on analyse l'état au moyen de l'unité (13) informatique sur la base du signal (22) de différence.

9. Procédé suivant la revendication 8,
**caractérisé en ce que**
l'on produit, au moyen de l'unité (13) informatique, un signal de fréquence reposant sur le signal (22) de différence ; et
l'on analyse l'état au moyen de l'unité (13) informatique sur la base du signal de fréquence.

10. Procédé suivant l'une des revendications 6 à 9,
**caractérisé en ce que**
l'on contrôle, au moyen de l'unité (13) informatique à l'aide de l'analyse d'état, s'il y a une anomalie dans le fonctionnement de la machine (8) ; et/ou
au moyen de l'unité (13) informatique, on détermine un degré d'usure de la machine (8) à l'aide de l'analyse d'état.

11. Dispositif d'analyse pour l'analyse acoustique de l'état d'une machine (8), dans lequel le dispositif (9) d'analyse a au moins un convertisseur (10, 11, 12) acoustique et une unité (13) informatique ;
**caractérisé en ce que**
le au moins un convertisseur (10, 11, 12) acoustique est agencé pour produire, en fonction de bruits de fonctionnement individuels respectifs d'au moins deux composants (14, 15, 16) de la machine (8), respectivement de signaux acoustiques individuels ;
l'unité (13) informatique est agencée pour, sur la base des signaux individuels, déterminer un signal acoustique d'ensemble à escompter ; et
l'unité (13) informatique est agencée pour produire un signal (20) de référence en fonction du signal d'ensemble.

12. Dispositif d'analyse suivant la revendication 11,
**caractérisé en ce que**
le dispositif (9) d'analyse a un dispositif (17) capteur, qui est agencé pour déterminer une condition d'environnement en cours de la machine (8) ; et
l'unité (13) informatique est agencée pour déterminer le signal d'ensemble en fonction de la condition d'environnement en cours.

13. Dispositif d'analyse suivant l'une des revendications 11 ou 12,
**caractérisé en ce que**
le au moins un convertisseur (10, 11, 12) acoustique est agencé pour produire des signaux (21) acoustiques de fonctionnement en fonction d'un bruit de fonctionnement de la machine (8) ; et
l'unité (13) informatique est agencée pour analyser l'état sur la base d'un écart du signal (21) de fonctionnement au signal (20) de référence.
